# EUROPÄISCHE PATENTSCHRIFT

(11) **EP 2 000 821 B1**
(45) Veröffentlichungstag und Bekanntmachung des Hinweises auf die Patenterteilung: **12.01.2011**
(21) Anmeldenummer: 08103447.2
(22) Anmeldetag: 09.04.2008
(51) Int. Cl.: G01S 7/40, G01S 13/93

(54) **Verfahren und Vorrichtung zur Zustandserkennung eines an einem Kraftfahrzeug angeordneten Abstandssensors**
Method and device for recognising the state of a distance sensor attached to a motor vehicle
Procédé et dispositif de reconnaissance de l'état d'un capteur de distance agencé sur un véhicule automobile

(30) Priorität: 01.06.2007 DE 102007025613
(43) Veröffentlichungstag der Anmeldung: 10.12.2008
(73) Patentinhaber: Robert Bosch GmbH, 70442 Stuttgart (DE)
(72) Erfinder: Brichzin, Volker, 71634 Ludwigsburg (DE); Gruber, Thomas, 71277 Rutesheim (DE); Urban, Werner, 71665 Vaihingen/Enz (DE); Garcia Bordes, Maria-Eugenia, 100-130 Seoul (KR); Schaut, Martin, 70499 Stuttgart (DE); Zimmermann, Sven, 71229 Leonberg (DE); Groeger, Tina, 74232 Abstadt (DE)

(56) Entgegenhaltungen:
- WO-A-01/22113
- WO-A-01/22114
- DE-A1- 19 963 001
- US-A1- 2005 174 222

## Beschreibung

Die Erfindung betrifft ein Verfahren und eine Vorrichtung zur Zustandserkennung eines an einem Kraftfahrzeug angeordneten Abstandssensors mit einem Prozessor und einem Speicher zur Abspeicherung von einem ersten Wert, der eine Anzahl von unplausiblen Zielobjektverlusten repräsentiert, und von zweiten Werten, die die Zeit des jeweiligen unplausiblen Zielobjektverlustes repräsentieren, und einen Geschwindigkeitsregler, mittels dessen die Geschwindigkeit des Kraftfahrzeugs regelbar ist.

Abstandssensoren mit Geschwindigkeitsregler werden im Rahmen einer automatischen Geschwindigkeitsregelung eines Kraftfahrzeugs zur Erkennung vorausfahrender Kraftfahrzeuge eingesetzt. Die automatische Fahrgeschwindigkeitsregelung übernimmt die Geschwindigkeitsregelung des Kraftfahrzeugs derart, dass eine Soll-Geschwindigkeit eingeregelt wird, so lange die Umgebungsbedingungen dies zulassen. Die automatische Fahrgeschwindigkeitsregelung wird auch als adaptive Fahrgeschwindigkeitsregelung bezeichnet, die englische Übersetzung der adaptiven Fahrgeschwindigkeitsregelung lautet adaptive cruise control, abgekürzt ACC. Das ACC ist ein auf Radar oder Lidar basierendes Fahrerassistenzsystem, das automatisch einen geeigneten Abstand zum in einer eigenen Spur vorausfahrenden Kraftfahrzeug einhält. Dieses ausgewählte vorausfahrende Kraftfahrzeug wird als Ziel- oder Regelobjekt oder auch als Zielfahrzeug bezeichnet.

Der Abstandssensor ist unfähig, bei Blindheit vorausfahrende Kraftfahrzeuge sauber zu erkennen und zu verfolgen. Von daher ist eine vertrauenswürdige Erkennung dieser Blindheit und konsequenter Weise ein Abschalten des ACC unabdingbar. Um zu entscheiden, ob der Abstandssensor des ACC blind oder nicht blind ist, sind verschiedene Verfahren zur Erkennung der Blindheit bereits verwirklicht. Dies kann entweder auf Radarindikatoren oder auf eine Kombination von schlechten Wetterbedingungen und einer Verfolgungsleistung des vorausfahrenden Kraftfahrzeuges basieren.

Aus der DE 199 45 250 A1 sind solch ein Verfahren und solch eine Vorrichtung bekannt. Zumindest zwei Indikatoren werden gewichtet und derart verknüpft, dass eine Aussage über einen wahrscheinlichen Zustand des Sensors erfolgen kann. Die Indikatoren werden aus von dem Sensor empfangenen oder ausgesendeten Signalen gebildet. Ein erster möglicher Indikator ist die mittlere Winkelgüte aller von dem System detektierten Objekte. Die Winkelgüte kann beispielsweise aus dem Quotienten von realem Objektwinkel und der Differenz aus realem und gemessenem Objektwinkel bestimmt werden. Ein weiterer Indikator ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Ein weiterer möglicher Indikator ist die Summe aller von dem System während einer Messung detektierten Objekte. Ein weiterer möglicher Indikator ist die Objektstabilität, die die Rate von Detektionsausfällen des für die Kraftfahrzeuglängsregelung ausgewählten Ziel- beziehungsweise Regelobjekts beschreibt. Genauere Angaben zur Auswertung und Nutzung dieses Indikators fehlen.

Der Erfindung liegt die Aufgabe zugrunde, ein einfaches Verfahren und eine einfache Vorrichtung zur Erkennung eines verschmutzten oder blinden Abstandssensors anzugeben.

Diese Aufgabe wird mit den Merkmalen der Hauptansprüche gelöst. Dabei sind folgende Verfahrensschritte angewandt: Der erste Wert, der die Anzahl von unplausiblen Zielobjektverlusten repräsentiert, wird zyklisch aktualisiert, die zweiten Werte, die die Zeit des jeweiligen unplausiblen Zielobjektverlustes repräsentieren, werden zyklisch aktualisiert, der erste Wert wird mit einem vorgebbaren ersten Schwellwert verglichen, der älteste der zweiten Werte wird mit einem vorgebbaren zweiten Schwellwert verglichen und abhängig von den Vergleichen wird ein eine Blindheit anzeigendes Zustandsbit gesetzt.

Unter extrem schlechten Wetterbedingungen, das bedeutet niedrige Temperaturen und Schneefall, kann eine optische Linse des Abstandssensors mit einer Eisschicht bedeckt sein, obwohl eine Heizung der Linse aktiviert ist. Dieses Phänomen führt zu einer verminderten Leistung des ACC, weil das verfolgte Objekt, das heißt, das vorausfahrende Kraftfahrzeug, in der eigenen Spur nicht sauber detektiert werden kann. In einem ersten Abtastzyklus wird das vorausfahrende Kraftfahrzeug erkannt und in einem darauf folgendem nicht mehr. Das bedeutet, dass das vorausfahrende Kraftfahrzeug zeitweise verloren geht oder überhaupt nicht mehr erkannt wird. Abhängig davon und des weiteren abhängig von der vorgegebenen und abgespeicherten Geschwindigkeit wird der Geschwindigkeitsregler das Kraftfahrzeug beschleunigen, solange das vorausfahrende Kraftfahrzeug nicht detektiert wird, und abgebremst, wenn es wieder erkannt wird. Dies ist ein offensichtlich ungewünschtes und unkomfortables Verhalten, das verhindert wird.

Die Linsenheizung wird bei niedrigen Temperaturen, also bei Temperaturen um den Gefrierpunkt herum, eingeschaltet. Ist die Linsenheizung eingeschaltet, wird eine Verfolgungsleistung, auch als Erkennungsleistung bezeichnet, des vorausfahrenden Kraftfahrzeugs überwacht. Das setzt voraus, dass ein vorausfahrendes Kraftfahrzeug als Regelobjekt verfügbar ist und das den Abstandssensor aufweisende Kraftfahrzeug in einem Folgemodus fährt.

Sobald bei niedriger Temperatur die Linsenheizung aktiviert wird, werden die Anzahl der Zielobjektverluste und sprunghaften Verluste gezählt. Dabei wird ein Speicherwert erhöht. Anders ausgedrückt wird ein Zählwerk dann erhöht, wenn ein Zielobjektverlust oder ein sprunghafter Verlust auftritt. Wird das Zählwerk innerhalb von 60 Sekunden einen Wert von 5 Verlusten oder sprunghaften Verlusten erreichen, wird das die Blindheit anzeigende Zustandsbit aktiviert, auch als Zustandsbit für die Blindheit, als Blindheits-Zustandsbit oder englisch als flag bit of blindness bezeichnet. Wird kein neuer Zielobjektverlust oder sprunghafter Verlust innerhalb von weiteren 60 Sekunden registriert, wird das Blindheits-Zustandsbit zurückgesetzt. Dieses Zurücksetzen ist unabhängig davon, ob die Linsenheizung eingeschaltet ist oder nicht. Mit diesem Sachverhalt ist ein gefilterter Wahrscheinlichkeits-Indikator für die Erkennung von Objekten definiert, wobei sich die Filterung über eine Zeitdauer erstreckt, im Englischen wird dieser Indikator als existence probability filtered indicator bezeichnet.

Ein Zielobjektverlust ist definiert als ein plötzlicher Verlust des vorausfahrenden Fahrzeugs. Das vorausfahrende Kraftfahrzeug ist im letzten Zyklus gemessen, im laufenden Zyklus wird das vorausfahrende Kraftfahrzeug nicht mehr erkannt.

Dabei sind Zielobjektverluste in drei Klassen eingeteilt. Die erste Klasse bildet die Klasse der plausiblen Zielobjektverluste, die hier vom Zählwerk unberücksichtigt bleiben. Der Wert des Speichers wird nicht erhöht.

Zu diesen plausiblen Zielobjektverlusten gehören zunächst einmal die Ausschermanöver. Solch ein Ausschermanöver ist beispielsweise ein Spurwechsel, der aufgrund eines aktivierten Blinkers plausibel ist. Auch in Kurvenfahrten treten Zielobjektverluste auf. Diese sind jedoch aufgrund erhöhter Kurvigkeit, die mittels eines Gierratensensors anzeigbar sind, erklärbar. Verluste können ebenfalls auftreten, wenn der laterale Versatz zu dem vorausfahrenden Kraftfahrzeug oberhalb von 1,2 Metern liegt, wenn der Abstand zu dem vorausfahrenden Kraftfahrzeug größer als 60 Meter ist, wenn der Abstand zu dem vorausfahrenden Kraftfahrzeug weniger als 10 Meter ist und wenn eine Geschwindigkeit unterhalb von 30 Kilometer pro Stunde gefahren wird. Auch solche Zielobjektverluste sind plausibel und bleiben unberücksichtigt.

In der zweiten Klasse sind unplausible Zielobjektverluste zusammengefasst. Solch ein unplausibler Zielobjektverlust tritt dann auf, wenn das vorausfahrende Kraftfahrzeug plötzlich verloren geht. Dabei wird vorausgesetzt, dass sich beide Kraftfahrzeuge, nämlich das den Abstandssensor aufweisende sich im Folgemodus befindliche Kraftfahrzeug und das ausgewählte vorausfahrende Kraftfahrzeug, auf gerader Strecke befinden und weder das sich im Folgemodus befindliche noch das ausgewählte vorausfahrende Kraftfahrzeug ein Ausschermanöver durchführen.

In der dritten Klasse ist zumindest ein weiterer unplausibler Zielobjektverlust, auch als sprunghafter Zielobjektverlust bezeichnet, gelistet. Solch ein sprunghafter Zielobjektverlust tritt dann auf, wenn die Linse teilweise überfroren ist. Dieses Phänomen tritt abhängig von der Linsenposition an dem Fahrzeug und abhängig von der Aerodynamik auf. Das Eis auf lediglich einer Linsenhälfte verursacht Interferenzen, so dass es scheint, dass das Zielobjekt sehr schnell ausscheren beziehungsweise einen Spurwechsel durchführen würde. Tatsächlich ist die gemessene Versatzgeschwindigkeit des Objektes unplausibel. Lediglich die unplausiblen Zielobjektverluste werden registriert und in einem Speicher abgespeichert.

In vorteilhafter Weise wird abhängig von dem Zustandsbit eine Anzeigeeinrichtung geschaltet. Dies kann in einfacher Weise ein Signalgeber sein, der ein akustisches Warnsignal für den Kraftfahrzeugführer ertönen lässt. In einer alternativen Ausführungsform ist die Anzeigeeinrichtung als optische Anzeigeeinrichtung ausgeführt, auf der ein optisches Signal für den Kraftfahrzeugführer dargestellt wird.

In vorteilhafter Weise wird abhängig von dem Zustandsbit der Geschwindigkeitsregler ausgeschaltet. Damit ist sichergestellt, dass der Kraftfahrzeugführer die alleinige Verantwortung für das Kraftfahrzeug wieder zu übernehmen hat.

Zum besseren Verständnis der Erfindung ist nachfolgend ein Ausführungsbeispiel anhand der Zeichnung näher erläutert.

Es zeigen
- Fig. 1: einen Abstandsensor mit einer Eisschicht in Schnittdarstellung,
- Fig. 2: den Abstandssensor mit der Eisschicht in Draufsicht,
- Fig. 3: ein Kraftfahrzeug mit dem vereisten Abstandssensor, der ein vorausfahrendes Kraftfahrzeug als Zielobjekt erfasst hat und auf Grund eines verringerten Erfassungsbereiches des Öfteren verliert, in Draufsicht und
- Fig. 4: ein Flussdiagramm

In den verschiedenen Figuren sind ähnliche oder dieselben Elemente durch gleiche Bezugszeichen bezeichnet.

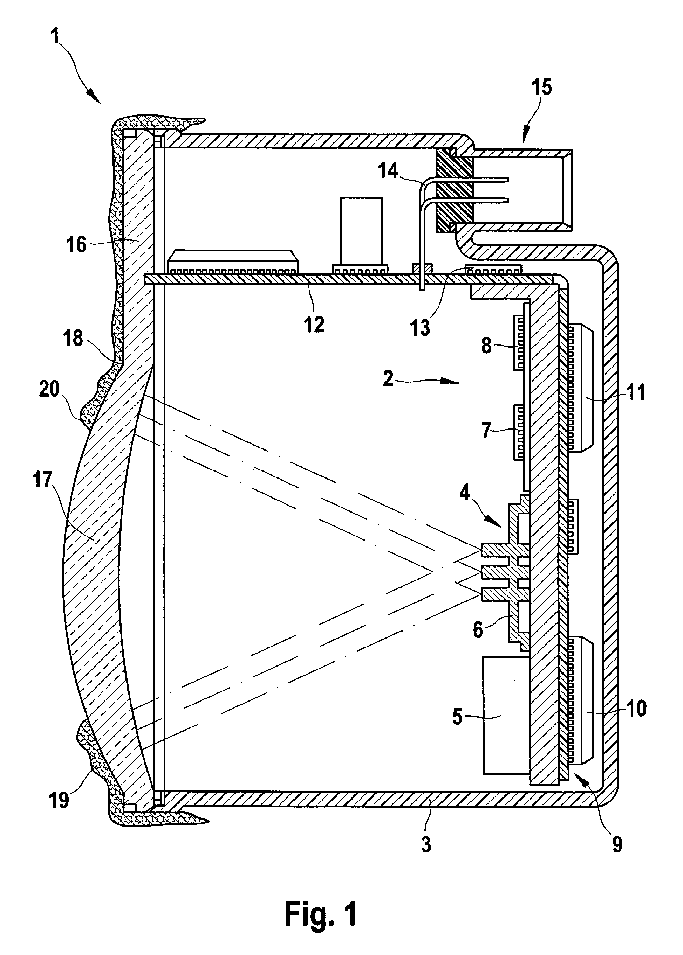

Figur 1 zeigt einen Abstandssensor 1 mit einer Vorrichtung 2 und einem Gehäuse 3. Die Vorrichtung 2 weist eine Radar-Sende-Empfangseinheit 4 mit einem Oszillatorblock 5, eine Strahlquelle 6 und weitere elektronische Bauteile 7 und 8, eine erste Leiterplatte 9 mit zumindest einem ersten Prozessor 10 und einem ersten Speicher 11 und eine zweite Leiterplatte 12 mit einem zweiten Prozessor 13 mit zumindest einem zweiten Speicher auf. In dem ersten Prozessor 10 werden Positionen und Geschwindigkeiten von erfassten Objekten berechnet und in dem Speicher 11 abgespeichert. Der zweite Prozessor 13 mit dem zweiten Speicher fungiert als Geschwindigkeitsregler. Von der zweiten Leiterplatte 12 führen elektrisch leitfähige Verbindungen 14 zu einer Steckverbindung 15. Das Gehäuse 3 weist eine Abdeckung 16 mit einer Linse 17 auf. Die Linse 17 weist einen Linsenrand 18 auf. Die Abdeckung 16 ist mit einer Eisschicht 19 bedeckt. Die Eisschicht 19 weist einen Eisschichtrand 20 auf.

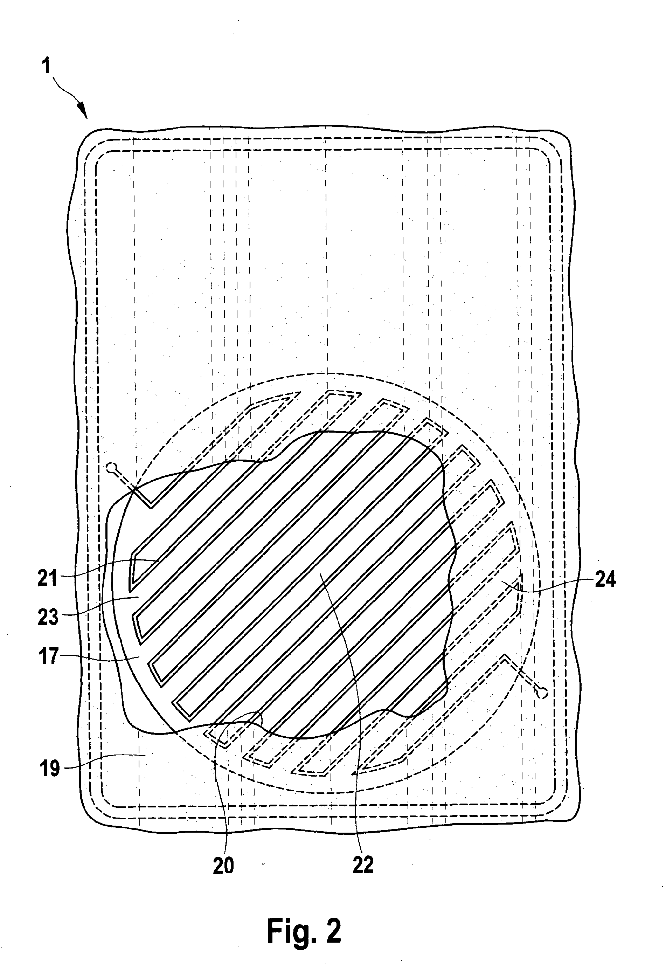

Figur 2 zeigt den mit der Eisschicht 19 bedeckten Abstandssensor 1. Die Linse 17 der Abdeckung 16 weist einen Heizdraht 21 als Linsenheizung auf. Die Abdeckung 16 ist von der Eisschicht 19 überzogen, die in einem Bereich 22 der Linse 17 eine etwa kreisförmige Ausnehmung aufweißt. Die Ausnehmung ist von dem Eisschichtrand 20 begrenzt. Eine rechte Linsenhälfte 23 bleibt weitestgehend eisfrei. Eine linke Linsenhälfte 24 ist von der Eisschicht 19 teilweise bedeckt.

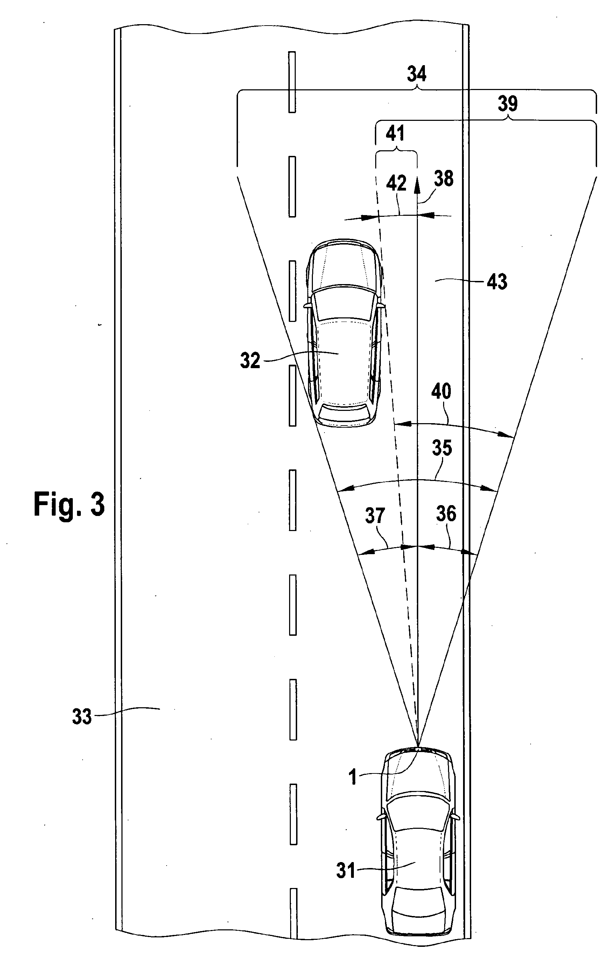

Figur 3 zeigt ein Kraftfahrzeug 31 mit dem Abstandssensor 1 auf einer Straße 33. Der Abstandssensor 1 des Kraftfahrzeuges 31 hat ein vorausfahrendes Fahrzeug 32 als Regelobjekt erfasst und das Kraftfahrzeug 31 befindet sich in Verfolgungsfahrt. Der Abstandssensor 1 sendet Strahlen aus, die sich parallel einer Fahrbahnebene der Straße 33 ausbreiten und von dem Regelobjekt 32 in den Abstandssensor 1 reflektiert werden. Ein Erfassungsbereich 34 des sauberen Sensors 1 weist einen maximalen Öffnungswinkel 35 von insgesamt 16 Grad auf, das sind ein Halbwinkel 36 von 8 Grad nach rechts und ein Halbwinkel 37 von 8 Grad nach links gemessen bezüglich einer Fahrtrichtung 38. Ein verringerter Erfassungsbereich 39 des mit einer Eisschicht 19 auf der Linsenhälfte 24 bedeckten Sensors 1 weist einen verringerten Öffnungswinkel 40 von insgesamt 11 Grad auf. In einem linken Teil 41 des Erfassungsbereiches 39 ergibt sich ein verringerter Halbwinkel 42 von 3 Grad. Ist der Abstandssensor 1 von der Eisschicht 19 bedeckt, breiten sich die Strahlen unter dem verringertem Erfassungsbereich 39 aus. Fährt das Kraftfahrzeug 31 auf einer Fahrbahnhälfte 43 der Straße 33 weit rechts und das Regelobjekt 32 weit links auf derselben Fahrbahnhälfte 43, so kommt es aufgrund der teilweise bedeckten Linsenhälfte 24 immer wieder zu sprunghaften Zielobjektverlusten.

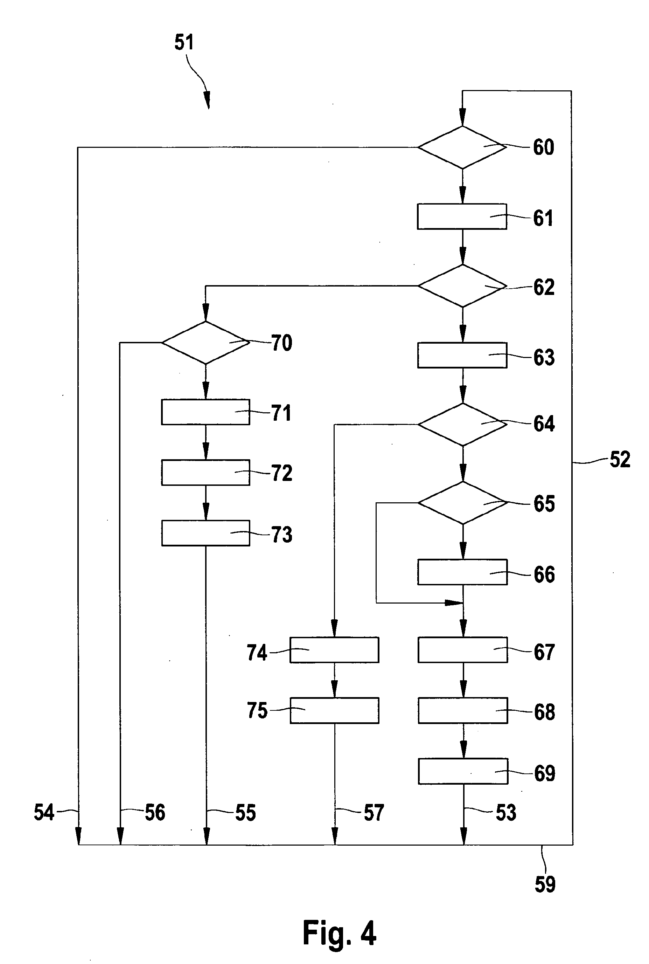

Fig. 4 zeigt ein Flussdiagramm 51 mit einer zyklischen Schleife 52. Die zyklische Schleife 52 weist einen ersten Zweig 53 und fünf weitere Zweige 54 - 58 und einen Rückführungszweig 59 auf. Der erste Zweig 53, wird auch als Hauptzweig bezeichnet und weist Verzweigungsschritte 60, 62, 64, 65 und Operationsschritte 61, 63 und 66 bis 69 auf. In dem ersten Verzweigungsschritt 60 wird abgefragt, ob die Außentemperatur unterhalb einer vorgebbaren Temperatur liegt oder ob das Zustandsbit für die Blindheit bereits gesetzt ist. Als vorgebbare Temperatur wird idealer weise der Gefrierpunkt gewählt. Ist eine der beiden Bedingungen erfüllt, werden in dem ersten Operationsschritt 61 ein oder mehrere Inhalte eines Feldes aktualisiert. Das Feld, auch als Zeitentabelle bezeichnet, weist 5 Zellen auf, in denen für jeden aufgetreten Zielobjektverlust oder sprunghaften Zielobjektverlust ein Zeitwert abgespeichert ist. Der Zeitwert beziehungsweise die Zeitentabelle werden aktualisiert. In dem zweiten Verzweigungsschritt 62 wird abgefragt, ob ein Zielobjektverlust oder sprunghaften Zielobjektverlust erkannt worden ist. Ist dies der Fall, so wird in dem zweiten Operationsschritt 63 ein abgespeicherter Wert, der die Anzahl der aufgetretenen Zielobjektverluste oder sprunghaften Zielobjektverluste repräsentiert, um eins erhöht. Danach wird in dem dritten Verzweigungsschritt 64 überprüft, ob eine maximale Anzahl von 5 Zielobjektverlusten oder sprunghaften Zielobjektverlusten bereits erreicht ist. Ist dies der Fall, so wird in dem vierten Verzweigungsschritt 65 überprüft, ob seit dem ersten Zielobjektverlust oder sprunghaften Zielobjektverlust, also seit dem zuerst ermittelten beziehungsweise dem ältesten Zielobjektverlust oder sprunghaften Zielobjektverlusts weniger als 60 Sekunden vergangen sind. Ist dies der Fall, so wird in dem dritten Operationsschritt 66 das Zustandsbit für die Blindheit gesetzt. Danach werden in dem vierten Operationsschritt 67 die Zeitwerte innerhalb der Zeitentabelle um jeweils eine Zelle verschoben, wobei der älteste Zeitwert entfällt. In dem fünften Operationsschritt 68 wird der abgespeicherte Wert, der die Anzahl der aufgetretenen Zielobjektverluste oder sprunghaften Zielobjektverluste repräsentiert, um eins dekrementiert. Und in dem sechsten Operationsschritt 69 wird der Inhalt der letzten Zelle der Zeitentabelle auf Null gesetzt. Nach dem Operationsschritt 69 wird der erste Zweig 53 auf den Rückführzweig 59 geführt und der Programmablauf wird zyklisch nach 100 Millisekunden wieder mit dem Verzweigungsschritt 60 neu gestartet.

Wird in dem Verzweigungsschritt 60 festgestellt, dass die Außentemperatur oberhalb der vorgebbaren Temperatur also oberhalb des Gefrierpunktes liegt oder das Zustandsbit für die Blindheit bereits gesetzt ist, so führt ein zweiter Zweig 54 direkt auf den Rückführzweig 59 und der Programmablauf wird zyklisch nach 100 Millisekunden wieder mit dem Verzweigungsschritt 60 neu gestartet.

Der dritte Zweig 55 weist einen Verzweigungsschritt 70 und drei Operationsschritte 71, 72 und 73 auf. Wird in dem zweiten Verzweigungsschritt 62 festgestellt, dass kein Zielobjektverlust oder sprunghafter Verlust aufgetreten ist, so wird in dem fünften Verzweigungsschritt 70 überprüft, ob seit dem letzten Zielobjektverlust oder sprunghaften Zielobjektverlust mehr als eine vorgebbare Zeit vergangen ist. Idealerweise ist für diese vorgebbare Zeit ein Zeitwert von 61 Sekunden gewählt. Ist dies der Fall, so werden in dem siebten Operationsschritt 71 alle Werte innerhalb der fünf Zellen der Zeitentabelle auf Null gesetzt, in dem achten Operationsschritt 72 der Speicherwert, der die Zielobjektverluste und sprunghaften Zielobjektverluste repräsentiert, auf Null gesetzt und in dem neunten Operationsschritt 73 wird das Zustandsbit für die Blindheit zurückgesetzt. Nach dem Operationsschritt 73 wird der dritte Zweig 55 auf den Rückführzweig 59 geführt und der Programmablauf wird zyklisch nach 100 Millisekunden wieder mit dem Verzweigungsschritt 60 neu gestartet.

In dem Verzweigungsschritt 70 wird festgestellt, ob seit dem letzten Zielobjektverlust oder sprunghaften Zielobjektverlust mehr als eine vorgebbare Zeit von idealer weise 60 Sekunden vergangen ist. Ist dies nicht der Fall, so führt der vierte Zweig 56 auf die Rückführschleife 59 und der Programmablauf wird zyklisch nach 100 Millisekunden wieder mit dem Verzweigungsschritt 60 neu gestartet.

Der fünfte Zweig 57 weist zwei Operationsschritte 74 und 75 auf. In dem Verzweigungsschritt 64 wird festgestellt, ob ein abgespeicherter Wert für die Zielobjektverluste oder sprunghaften Zielobjektverluste bereits einen maximalen Wert von 5 Verlusten erreicht hat. Ist dies nicht der Fall, so werden in dem Operationsschritt 74 die Zeitwerte innerhalb der Zeitentabelle um jeweils eine Zelle verschoben, wobei der älteste Zeitwert entfällt, in dem Operationsschritt 75 wird der Wert in der letzten Zelle der Zeitentabelle zu Null gesetzt und der Programmablauf wird zyklisch nach 100 Millisekunden wieder mit dem Verzweigungsschritt 60 neu gestartet.

In dem Verzweigungsschritt 65 wird gestellt, ob seit dem ersten Zielobjektverlust oder sprunghaften Zielobjektverlust weniger als 60 Sekunden vergangen sind. Ist dies nicht der Fall, so wird in dem sechsten Zweig 58 zu dem Operationsschritt 67 geführt und die Zeiten innerhalb der Zeitentabelle um jeweils eine Zelle verschoben, wobei die älteste Zeit entfällt.

## Patentansprüche

1. Verfahren zur Zustandserkennung eines an einem Kraftfahrzeug (31) angeordneten Abstandssensors (1) mit einem Prozessor (10) und einem Speicher (11) zur Abspeicherung von einem ersten Wert, der eine Anzahl von unplausiblen Zielobjektverlusten repräsentiert, und von zweiten Werten, die die Zeit des jeweiligen unplausiblen Zielobjektverlustes repräsentieren, und einen Geschwindigkeitsregler (13), mittels dessen die Geschwindigkeit des Kraftfahrzeugs (31) regelbar ist, mit folgenden Verfahrensschritten:
- der erste Wert, der die Anzahl von unplausiblen Zielobjektverlusten repräsentiert, wird zyklisch aktualisiert,
- die zweiten Werte, die die Zeit des jeweiligen unplausiblen Zielobjektverlustes repräsentieren, werden zyklisch aktualisiert,
- der erste Wert wird mit einem vorgebbaren ersten Schwellwert verglichen,
- der älteste der zweiten Werte wird mit einem vorgebbaren zweiten Schwellwert verglichen und
- wird ein eine Blindheit anzeigendes Zustandsbit gesetzt , wenn der erste Wert den ersten Schwellenwert erreicht und der älteste der zweiten Werte kleiner als der zweite Schwellenwert ist.

2. Verfahren nach Anspruch 1, **gekennzeichnet durch** folgenden Verfahrensschritt dass
- zusätzlich abhängig von einer eingeschalteten Linsenheizung (21) wird das eine Blindheit anzeigende Zustandsbit gesetzt.

3. Verfahren nach Anspruch 1 oder 2, **gekennzeichnet durch** folgenden Verfahrensschritt:
- abhängig von dem eine Blindheit anzeigenden Zustandsbit wird eine Anzeigeeinrichtung geschaltet.

4. Verfahren nach Anspruch 1, 2 oder 3, **gekennzeichnet durch** folgenden Verfahrensschritt:
- zusätzlich abhängig von dem eine Blindheit anzeigenden Zustandsbit wird der Geschwindigkeitsregler (13) geschaltet.

5. Verfahren nach einem oder mehreren der vorhergehenden Ansprüche 1 bis 4, **gekennzeichnet durch** folgenden Verfahrensschritt,
- der jüngste der zweiten Werte wird mit einem dritten Schwellwert verglichen und
- das eine Blindheit anzeigende Zustandsbit zurückgesetzt wird, wenn der jüngste der zweiten Werte grösser als der dritte Schwellenwert ist.

6. Verfahren nach Anspruch 1, **dadurch gekennzeichnet, dass** der erste Schwellwert einen Wert zwischen 3 und 7, in vorteilhafter Weise den Wert 5 einnimmt.

7. Verfahren nach Anspruch 1, **dadurch gekennzeichnet, dass** der zweite Schwellwert einen Wert zwischen 20 Sekunden und 2 Minuten, in vorteilhafter Weise einen Wert von 60 Sekunden einnimmt.

8. Verfahren nach Anspruch 5, **dadurch gekennzeichnet, dass** der dritte Schwellwert einen Wert zwischen 20 Sekunden und 2 Minuten, in vorteilhafter Weise einen Wert von 60 Sekunden einnimmt.

9. Vorrichtung zur Zustandserkennung eines an einem Kraftfahrzeug (31) angeordneten Abstandssensors (1) mit einem Prozessor (10) und einem Speicher (11) zur Abspeicherung von einem ersten Wert, der eine Anzahl von unplausiblen Zielobjektverlusten repräsentiert, und von zweiten Werten, die die Zeit des jeweiligen unplausiblen Zielobjektverlustes repräsentieren, und einen Geschwindigkeitsregler (13), mittels dessen die Geschwindigkeit des Kraftfahrzeugs (31) regelbar ist, **dadurch gekennzeichnet, dass** der erste Wert, der die Anzahl von unplausiblen Zielobjektverlusten repräsentiert, und die zweiten Werte, die die Zeit des jeweiligen unplausiblen Zielobjektverlustes repräsentieren, mittels des Prozessors (10) zyklisch aktualisiert werden, der erste Wert mit einem vorgebbaren ersten Schwellwert und der älteste der zweiten Werte mit einem vorgebbaren zweiten Schwellwert mittels des Prozessors (10) verglichen werden und wird ein eine Blindheit anzeigendes Zustandsbit wird mittels des Prozessors (10) gesetzt, wenn der erste Wert den ersten Schwellenwert erreicht und der älteste der zweiten Werte kleiner als der zweite Schwellenwert ist.

## Claims

1. Method for detecting the state of a distance sensor (1) which is arranged on a motor vehicle (31) and has a processor (10), a memory (11) for storing a first value representing a number of implausible losses of the target object and second values representing the time of the respective implausible loss of the target object, and a speed controller (13) which can be used to control the speed of the motor vehicle (31), said method having the following method steps:
- the first value representing the number of implausible losses of the target object is cyclically updated,
- the second values representing the time of the respective implausible loss of the target object are cyclically updated,
- the first value is compared with a predefinable first threshold value,
- the oldest of the second values is compared with a predefinable second threshold value, and
- a state bit indicating blindness is set if the first value reaches the first threshold value and the oldest of the second values is less than the second threshold value.

2. Method according to Claim 1, **characterized by** the following method step:
- the state bit indicating blindness is additionally set on the basis of a lens heater (21) which has been switched on.

3. Method according to Claim 1 or 2, **characterized by** the following method step:
- a display device is operated on the basis of the state bit indicating blindness.

4. Method according to Claim 1, 2 or 3, **characterized by** the following method step:
- the speed controller (13) is additionally operated on the basis of the state bit indicating blindness.

5. Method according to one or more of the preceding Claims 1 to 4, **characterized by** the following method step:
- the most recent of the second values is compared with a third threshold value, and
- the state bit indicating blindness is reset if the most recent of the second values is greater than the third threshold value.

6. Method according to Claim 1, **characterized in that** the first threshold value assumes a value of between 3 and 7, advantageously a value of 5.

7. Method according to Claim 1, **characterized in that** the second threshold value assumes a value of between 20 seconds and 2 minutes, advantageously a value of 60 seconds.

8. Method according to Claim 5, **characterized in that** the third threshold value assumes a value of between 20 seconds and 2 minutes, advantageously a value of 60 seconds.

9. Device for detecting the state of a distance sensor (1) which is arranged on a motor vehicle (31) and has a processor (10), a memory (11) for storing a first value representing a number of implausible losses of the target object and second values representing the time of the respective implausible loss of the target object, and a speed controller (13) which can be used to control the speed of the motor vehicle (31), **characterized in that** the first value representing the number of implausible losses of the target object and the second values representing the time of the respective implausible loss of the target object are cyclically updated using the processor (10), the first value is compared with a predefinable first threshold value and the oldest of the second values is compared with a predefinable second threshold value using the processor (10), and a state bit indicating blindness is set using the processor (10) if the first value reaches the first threshold value and the oldest of the second values is less than the second threshold value.

## Revendications

1. Procédé pour détecter l'état d'un détecteur de distance (1) disposé sur un véhicule automobile (31) et doté d'un processeur (10), d'une mémoire (11) qui conserve une première valeur qui représente un nombre de pertes non plausibles d'objets cibles et des deuxièmes valeurs qui représentent l'instant de chaque perte non plausible d'objets cibles, un régulateur de vitesse (13) permettant de réguler la vitesse du véhicule automobile (31), le procédé présentant les étapes suivantes :
- la première valeur qui représente le nombre de pertes non plausibles d'objets cibles est actualisée cycliquement,
- les deuxièmes valeurs qui représentent les instants des pertes non plausibles d'objets cibles sont actualisées cycliquement,
- la première valeur est comparée à une première valeur de seuil prédéterminée,
- la plus ancienne des deuxièmes valeurs est comparée à une deuxième valeur de seuil prédéterminée et
- un bit d'état qui indique la cécité est activé lorsque la première valeur atteint la première valeur de seuil et lorsque la plus ancienne des deuxièmes valeurs est inférieure à la deuxième valeur de seuil.

2. Procédé selon la revendication 1, **caractérisé par** l'étape suivante, dans laquelle le bit d'état qui indique la cécité est activé en fonction du branchement d'un chauffage de lentille (21).

3. Procédé selon les revendications 1 ou 2, **caractérisé par** l'étape dans laquelle un dispositif d'affichage est branché en fonction du bit d'état qui indique la cécité.

4. Procédé selon les revendications 1, 2 ou 3, **caractérisé par** l'étape dans laquelle le régulateur de vitesse (13) est de plus branché en fonction du bit d'état qui indique la cécité.

5. Procédé selon l'une ou plusieurs des revendications 1 à 4 qui précèdent, **caractérisé par** les étapes dans lesquelles la plus récente des deuxièmes valeurs est comparée à une troisième valeur de seuil et le bit d'état qui indique la cécité est désactivé si la plus récente des deuxièmes valeurs est supérieure à la troisième valeur de seuil.

6. Procédé selon la revendication 1, **caractérisé en ce que** la première valeur de seuil est comprise entre 3 et 7 et vaut avantageusement 5.

7. Procédé selon la revendication 1, **caractérisé en ce que** la deuxième valeur de seuil est comprise entre 20 secondes et 2 minutes et est avantageusement de 60 secondes.

8. Procédé selon la revendication 5, **caractérisé en ce que** la troisième valeur de seuil est comprise entre 20 secondes et 2 minutes et est avantageusement de 60 secondes.

9. Dispositif de détection de l'état d'un détecteur de distance (1) disposé sur un véhicule automobile (31) et doté d'un processeur (10), d'une mémoire (11) qui conserve une première valeur qui représente un nombre de pertes non plausibles d'objets cibles et des deuxièmes valeurs qui représentent l'instant de chaque perte non plausible d'objets cibles, un régulateur de vitesse (13) permettant de réguler la vitesse du véhicule automobile (31),
**caractérisé en ce que**
la première valeur qui représente le nombre de pertes non plausibles d'objets cibles et les deuxièmes valeurs qui représentent l'instant de chaque perte non plausible d'objets cibles sont actualisés cycliquement au moyen du processeur (10),
**en ce que** la première valeur est comparée au moyen du processeur (10) à une première valeur de seuil prédéterminée,
**en ce que** la plus ancienne des deuxièmes valeurs est comparée au moyen du processeur (10) à une deuxième valeur de seuil prédéterminée et
**en ce qu'**un bit d'état qui indique la cécité est délivré au moyen du processeur (10) lorsque la première valeur attient la première valeur de seuil et lorsque la plus ancienne des deuxièmes valeurs est inférieure à la deuxième valeur de seuil.
